# FASCICULE DE BREVET EUROPEEN

(11) **EP 3 098 403 B1**
(45) Date de publication et mention de la délivrance du brevet: **06.11.2019**
(21) Numéro de dépôt: 15305811.0
(22) Date de dépôt: 28.05.2015
(51) Int. Cl.: F01M 1/16, F01L 1/344, F15B 13/04, F16K 31/06

(54) **DISPOSITIF DE COMMANDE D'UNE ALIMENTATION EN FLUIDE SOUS PRESSION**
VORRICHTUNG ZUR STEUERUNG DER ZUFUHR EINER UNTER DRUCK STEHENDEN FLÜSSIGKEIT
DEVICE FOR CONTROLLING A PRESSURISED FLUID SUPPLY

(43) Date de publication de la demande: 30.11.2016
(73) Titulaire: BONTAZ CENTRE R & D, 74460 Marnaz (FR)
(72) Inventeur: PEROTTO, Stéphane, Pascal, 74130 Ayze (FR); TAUPEAU, Anthony, Raymond, Arthur, 74330 Poisy (FR)
(74) Mandataire: Brevalex

(56) Documents cités:
- DE-A1- 19 949 234
- JP-A- H01 261 581
- US-A- 5 571 248
- US-A- 5 876 185
- US-A- 5 894 860

## Description

La présente invention se rapporte à un dispositif de commande de l'alimentation d'un système avec un fluide sous pression, par exemple un dispositif de commande pour la régulation de la pression d'huile dans un moteur thermique.

Un clapet hydraulique permet de transférer un fluide d'une voie à une autre voie lorsque le fluide atteint un seuil de pression, dit pression d'ouverture. Le clapet est disposé entre une voie d'amenée du fluide sous pression et une voie d'évacuation du fluide vers le système à alimenter. Il comporte un corps de clapet comprenant un alésage, un piston ou obturateur monté à coulissement étanche ou sensiblement étanche dans l'alésage du corps de clapet, un siège de clapet contre lequel repose le piston en position de fermeture du clapet, et un ressort qui rappelle le piston contre le siège de clapet. Le niveau de pression d'ouverture du clapet est déterminé par la force de rappel du ressort. Le siège de clapet est disposé entre la voie d'amenée du fluide et la voie de transfert du fluide. Lorsque le piston est décollé du siège de clapet, les deux voies sont en communication sinon elles sont isolées l'une de l'autre.

La force du ressort de rappel est fonction de la section du piston qui voit la pression hydraulique. Un ressort de grande raideur, donc ayant une grande force de rappel, peut donc être nécessaire.

Par ailleurs dans le dispositif de commande à actionnement extérieur, également appelés distributeurs, la mise en communication des deux voies se fait par exemple au moyen d'un noyau magnétique déplacé par l'alimentation d'une bobine et non par l'action directe de la pression sur le piston. DE19949234 A1 décrit un distributeur de ce type. Il peut être intéressant d'avoir un distributeur qui est dans une certaine mesure sensible directement à cette pression.

### EXPOSÉ DE L'INVENTION

C'est par conséquent le but de la présente invention d'offrir un dispositif de commande de l'alimentation en fluide sous pression offrant une nouvelle structure qui permette dans le cas de clapet hydraulique de mettre en œuvre des moyens de rappel de force réduite et dans le cas de distributeur d'avoir une certaine sensibilité directe à la pression.

Le but précédemment énoncé est atteint par le distributeur selon la revendication 1, lequel comporte un dispositif de commande de l'alimentation en fluide comportant un corps, un équipage mobile dont une partie au moins est apte à coulisser dans le corps, le corps comprenant au moins un premier orifice latéral d'alimentation en fluide sous pression et au moins un premier orifice latéral d'évacuation du fluide sous pression, des moyens de rappel en fermeture de l'équipage mobile, l'équipage mobile comportant une gorge de l'équipage mobile dans sa surface latérale en communication permanente avec le premier orifice latéral d'alimentation. Un élément est monté mobile dans un logement de l'équipage mobile et est fixe par rapport au corps du dispositif en un sens opposé au sens de déplacement de l'équipage mobile vers un état de communication des orifices d'alimentation et d'évacuation, le logement étant en communication permanente avec la gorge pour mettre en contact le fluide et l'élément.

En d'autres termes, on prévoit qu'une partie de la pression devant s'exercer sur la paroi transversale amont de la gorge soit reprise par le corps par l'intermédiaire de un ou plusieurs mini-pistons traversant l'équipage mobile, ainsi la surface amont de la gorge est inférieure à la surface aval de la gorge, il en résulte que la résultante des forces due au fluide sous pression s'appliquant sur l'équipage mobile est orientée dans le sens d'ouverture de la communication entre l'orifice de d'alimentation et l'orifice d'évacuation.

Dans un exemple, le dispositif est un clapet et l'équipage mobile comporte un piston uniquement. Grâce à l'invention, des moyens de rappel de force réduite peuvent être mis en œuvre car la force à laquelle ils sont destinés à s'opposer est réduite puisqu'elle est proportionnelle à la surface active de l'élément. Ainsi en choisissant un élément ayant une surface active faible la force appliquée par la pression sur le piston est réduite. Le ressort peut être alors de taille réduite.

Selon l'invention, il s'agit d'un distributeur comportant des moyens d'actionnement pour mettre en communication ou non l'orifice d'alimentation et l'orifice d'évacuation indépendamment de la pression, par exemple des moyens électromagnétiques, ce qui permet de réaliser une électrovanne qui offre une sensibilité directe à la pression du fluide. Cette sensibilité directe permet par exemple de réaliser des distributeurs plus sûrs, puisqu'ils peuvent permettre de laisser passer un fluide sous pression même en cas de défaillance des moyens d'actionnement.

La présente invention a alors pour objet un dispositif de commande de l'alimentation en fluide sous pression comportant un corps comprenant un alésage d'axe longitudinal, un équipage mobile apte à coulisser dans l'alésage, au moins un orifice d'alimentation réalisé dans le corps et disposé latéralement par rapport à l'axe longitudinal, au moins un orifice d'évacuation réalisé dans le corps latéralement par rapport à l'axe longitudinal, l'équipage mobile étant apte à coulisser entre au moins une première position d'interruption de la communication entre l'orifice d'alimentation et l'orifice d'évacuation et une deuxième position de mise en communication entre l'orifice d'alimentation et l'orifice d'évacuation, des moyens de rappel de l'équipage mobile vers la première position, l'équipage mobile comprenant une surface latérale destinée à coopérer avec l'alésage de manière étanche ou sensiblement étanche, au moins une gorge dans la surface latérale de l'équipage mobile, ladite gorge étant en communication permanente avec l'orifice d'alimentation, l'équipage mobile comportant au moins un logement s'étendant parallèlement à l'axe longitudinal et un élément monté à coulissement dans ledit logement, ledit logement étant en communication permanente avec ladite gorge de sorte qu'une extrémité dudit élément soit en contact avec le fluide sous pression et dans lequel l'élément est fixe par rapport au corps au moins dans un sens opposé au sens de déplacement de l'équipage mobile de la première position vers la deuxième position.

Dans un exemple de réalisation, l'équipage mobile peut comporter plusieurs logements en communication permanente avec ladite gorge et un élément coulissant dans chaque logement, de sorte qu'une extrémité desdits éléments soit en contact avec le fluide sous pression et dans lequel les éléments sont fixes par rapport au corps au moins dans un sens opposé au sens de déplacement de l'équipage mobile de la première position vers la deuxième position.

Le logement de l'équipage mobile est par exemple coaxial à l'axe longitudinal du corps.

Dans un exemple de réalisation, l'équipage mobile est un piston comportant la gorge et au moins un alésage longitudinal traversant dans lequel est monté à coulissement l'élément, et dans lequel la deuxième extrémité de l'élément est en butée mécanique contre un fond du corps.

La présente invention a également pour objet un distributeur comportant un dispositif de commande selon l'invention et des moyens d'actionnement externes aptes à déplacer l'équipage mobile dans position d'ouverture indépendamment du niveau de pression dans la gorge.

Les moyens d'actionnement comportent un noyau magnétique et un solénoïde apte à déplacer le noyau magnétique le long de l'axe longitudinal.

L'équipage mobile comporte un tiroir de distribution comprenant la gorge et le noyau magnétique solidaire du tiroir de distribution. L'équipage mobile comporte un poussoir entre le tiroir de distribution et le noyau magnétique.

Le logement est formé dans le noyau magnétique et le tiroir de distribution et le poussoir comportent un passage d'amenée du fluide sous pression jusqu'au logement dans le poussoir.

La présente invention a également pour objet un système hydraulique comportant un dispositif de commande selon l'invention ou un distributeur selon l'invention.

La présente invention a également pour objet une pompe hydraulique comportant un dispositif de commande selon l'invention ou un distributeur selon l'invention.

La présente invention a également pour objet un système de propulsion d'un véhicule automobile comportant un moteur thermique et une pompe selon l'invention.

### BRÈVE DESCRIPTION DES DESSINS

La présente invention sera mieux comprise sur la base de la description qui va suivre et des dessins en annexe sur lesquels:
- la figure 1 est une vue en coupe d'un exemple de réalisation d'un clapet hydraulique selon l'invention dans un état de fermeture,
- la figure 2 est une vue en coupe longitudinale du clapet de la figure 1 dans un état d'ouverture,
- la figure 3 est une vue en coupe d'une variante de réalisation du clapet hydraulique de la figure 1 dans un état de fermeture,
- la figure 4 est une vue en coupe longitudinale du clapet de la figure 3 dans un état d'ouverture,
- la figure 5 est une vue en coupe d'un exemple de réalisation d'une électrovanne selon l'invention dans un état de fermeture, les moyens d'actionnement n'étant pas activés,
- la figure 6 est une vue en coupe longitudinale de l'électrovanne de la figure 3 dans un état d'ouverture, les moyens d'actionnement n'étant pas activés,
- la figure 7 est une vue en coupe de l'électrovanne de la figure 5 dans un état d'ouverture les moyens d'actionnement étant activés,
- la figure 8 est une vue en coupe d'une variante de réalisation de l'exemple de réalisation de la figure 5, dans un état de fermeture, les moyens d'actionnement n'étant pas activés,
- la figure 9 est une vue en coupe longitudinale de l'électrovanne de la figure 8 dans un état d'ouverture, les moyens d'actionnement n'étant pas activés,
- la figure 10 est une vue en coupe de l'électrovanne de la figure 8 dans un état d'ouverture, les moyens d'actionnement étant activés,
- la figure 11 est une vue en coupe d'une variante de réalisation de l'exemple de réalisation de la figure 5, dans un état d'ouverture, les moyens d'actionnement étant activés ou pas.

### EXPOSÉ DÉTAILLÉ DE MODES DE RÉALISATION PARTICULIERS

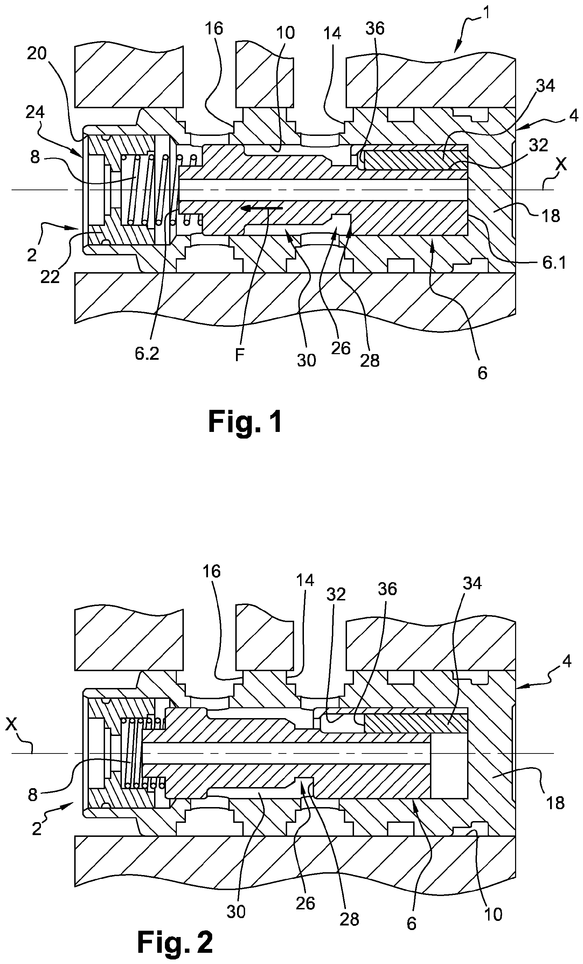

Sur les figures 1 et 2, on peut voir un exemple de réalisation d'un clapet hydraulique selon l'invention.

Le clapet hydraulique 2 peut être monté directement sur le carter d'un bloc moteur thermique ou dans un carter 1 de pompe à huile d'un moteur thermique pour la régulation de la pression d'huile dans un moteur thermique ou la régulation de la pression de n'importe quel fluide.

Le clapet 2 comporte un corps 4 destiné à être monté par exemple dans un carter moteur, un piston 6 ou obturateur et un moyen de rappel 8 rappelant le piston 6 en position de fermeture du clapet.

Le corps présente un axe longitudinal X et comporte un alésage 10 d'axe longitudinal X, dans lequel est monté à coulissement sensiblement étanche le piston 6, au moins une orifice d'alimentation 14 latéral et au moins un orifice d'évacuation 16 latéral, les deux orifices latéraux 14 et 16 débouchant dans l'alésage 10 et étant disposés à des positions longitudinales différentes le long de l'axe X.

L'orifice d'alimentation latéral 14 est destiné à être connecté à une source de fluide sous pression et l'orifice d'évacuation latéral 16 est destiné à être connecté à un système à alimenter en fluide.

Dans l'exemple représenté, le corps comporte deux orifices d'alimentation 14 diamétralement opposés et deux orifices d'évacuation 16 diamétralement opposés.

L'alésage est fermé à une extrémité longitudinale amont par un fond 18 contre lequel est destiné à venir en appui une extrémité longitudinale amont 6.1 du piston. L'amont et l'aval sont considérés par rapport au sens de déplacement du piston pour l'ouverture du clapet, ce sens étant symbolisé par la flèche F.

Le moyen de rappel 8, qui est dans l'exemple représenté formé par un ressort de compression hélicoïdal, est monté en réaction entre une extrémité longitudinale aval 20 de l'alésage, opposée au fond 18, et une extrémité longitudinale aval 6.2 du piston opposée à l'extrémité longitudinale amont 6.1 du piston.

Dans l'exemple représenté, le ressort 8 est en appui contre une pièce 22 fixée dans l'alésage.

Dans l'exemple représenté, le clapet comporte un évent 24 formé au niveau de l'extrémité longitudinale aval de l'alésage 10 et le piston 6 comporte un passage longitudinal s'étendant sur toute sa longueur et débouchant dans ses extrémités amont et aval et communiquant avec l'évent 24.

Le piston comporte dans sa surface latérale extérieure une gorge annulaire 26, qui, dans un état de fermeture du clapet (figure 1), est située au droit de l'ouverture d'alimentation 14.

La gorge 26 est délimitée longitudinalement par une extrémité amont 28 et une extrémité aval 30. De manière avantageuse, la gorge 26 a une forme « étagée » simplifiant son procédé de réalisation. En variante, le diamètre de fond de gorge pourrait être le même sur toute la longueur de la gorge.

La gorge 26 présente une certaine extension axiale de sorte que, à l'état fermé, son extrémité aval soit en amont de l'ouverture d'évacuation, et à l'état ouvert, son extrémité amont soit au droit de l'ouverture d'alimentation et son extrémité aval soit au droit de l'ouverture d'évacuation et mette en communication l'ouverture d'alimentation 14 et l'ouverture d'évacuation 16.

Le piston 6 comporte un logement 32 s'étendant parallèlement à l'axe longitudinal et débouchant dans l'extrémité amont de la gorge 26 et dans l'extrémité longitudinale amont du piston, et un élément 34 monté mobile en translation dans l'alésage de manière sensiblement étanche. L'élément 34 est en butée permanente contre le fond de l'alésage.

Ainsi le fluide sous pression pénétrant par l'orifice d'alimentation 14 dans la gorge 26 applique une pression sur les parois de la gorge et sur une extrémité longitudinale aval 36 de l'élément 34.

Les surfaces sur lesquelles s'applique la pression du fluide sont égales aux surfaces projetées des parois de la gorge sur un plan perpendiculaire à l'axe longitudinal.

Le fonctionnement du clapet hydraulique selon l'invention va maintenant être décrit.

A l'état de fermeture représenté sur la figure 1, le piston 6 est en position reculée, son extrémité longitudinale amont en butée contre le fond de l'alésage.

Le fluide provenant de la source d'alimentation pénètre dans la gorge 26 via l'orifice d'alimentation 14, sa pression s'applique sur les extrémités amont 28 et aval 30 de la gorge 26. Or du fait de la présence du logement et de l'élément 34 qui est mobile par rapport au piston 6 et en butée contre le fond de l'alésage 4, la surface de la gorge sur laquelle la pression s'exerce dans le sens aval et supérieure celle sur laquelle la pression s'exerce dans le sens amont et la surface résultante est égale à la surface de l'extrémité aval 36 de l'élément 34. Il y a donc une force motrice qui s'exerce sur le piston dans le sens de l'ouverture du clapet.

La pression du fluide assurant l'ouverture du clapet dépend de la contre-réaction appliquée par le moyen de rappel et de la surface résultante. Lorsque la pression de fluide est suffisante, le piston se déplace selon la flèche F, l'extrémité aval de la gorge 26 arrive au droit du ou des orifices d'évacuation 16 et met en communication la source d'alimentation et le système à alimenter (figure 2). La communication entre le système et l'évent est interrompue.

Grâce à l'invention, la charge du ressort peut être très faible car elle dépend de la surface résultante sur laquelle la pression du fluide va s'exercer, qui correspond à la section transversale de l'élément 34, qui peut être faible. Par conséquent à pression d'ouverture donnée, le clapet selon l'invention met en un ressort ayant une charge plus faible que les clapets de l'état de la technique, ce qui permet d'utiliser des ressorts plus petits et donc de gagner en encombrement.

En outre, le clapet est de réalisation simplifiée car l'alésage du corps présente un seul diamètre et le piston comporte un seul diamètre extérieur, contrairement aux clapets de l'état de la technique dans lesquels l'alésage du corps présente au moins deux diamètres afin de former un siège de clapet contre lequel le piston vient en appui pour fermer le clapet.

Dans l'exemple des figures 1 et 2, un seul élément mobile par rapport au piston est mis en œuvre. En variante, plusieurs éléments pourraient être montés mobiles dans le piston, par exemple répartis autour de l'axe longitudinal.

De plus, les éléments mobiles pourraient avoir des sections transversales différentes.

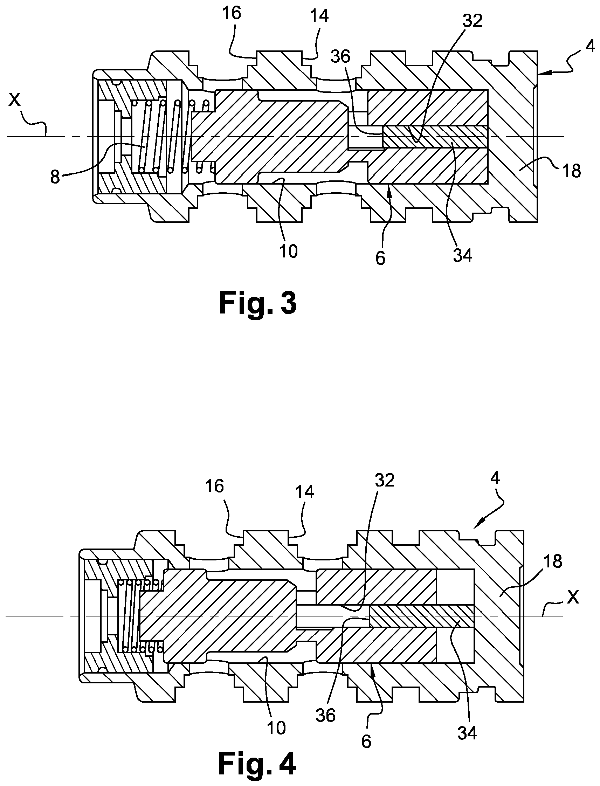

Sur les figures 3 et 4, est représentée une variante de réalisation du clapet des figures 1 et 2, dans laquelle l'élément 34 et l'alésage 32 sont coaxiaux à l'axe longitudinal X, dans un état fermé et un état ouvert respectivement.

Le fonctionnement du clapet des figures 3 et 4 est similaire à celui du clapet des figures 1 et 2.

Dans les exemples représentés, l'élément 34 est indépendant du corps du clapet et est en butée contre celui-ci. En variante, on peut envisager qu'il soit solidaire du fond de l'alésage, voire qu'il soit réalisé d'un seul tenant avec le fond.

Dans l'exemple représenté, l'extrémité longitudinale de l'élément affleure sensiblement l'extrémité amont de la gorge 26 mais on pourrait prévoir qu'elle soit en retrait par rapport à l'extrémité amont, i.e. l'élément aurait une longueur inférieure à celle de l'alésage, ou en saillie de l'extrémité amont, i.e. l'élément aurait une longueur supérieure à celle de l'alésage.

Le choix et la section des éléments dépendent du seuil de pression souhaité pour le clapet.

A titre d'exemple uniquement, le diamètre du piston pourrait avoir un diamètre de 10 mm, et le diamètre de l'élément 34 pourrait être compris entre 0,5 mm et 3 mm.

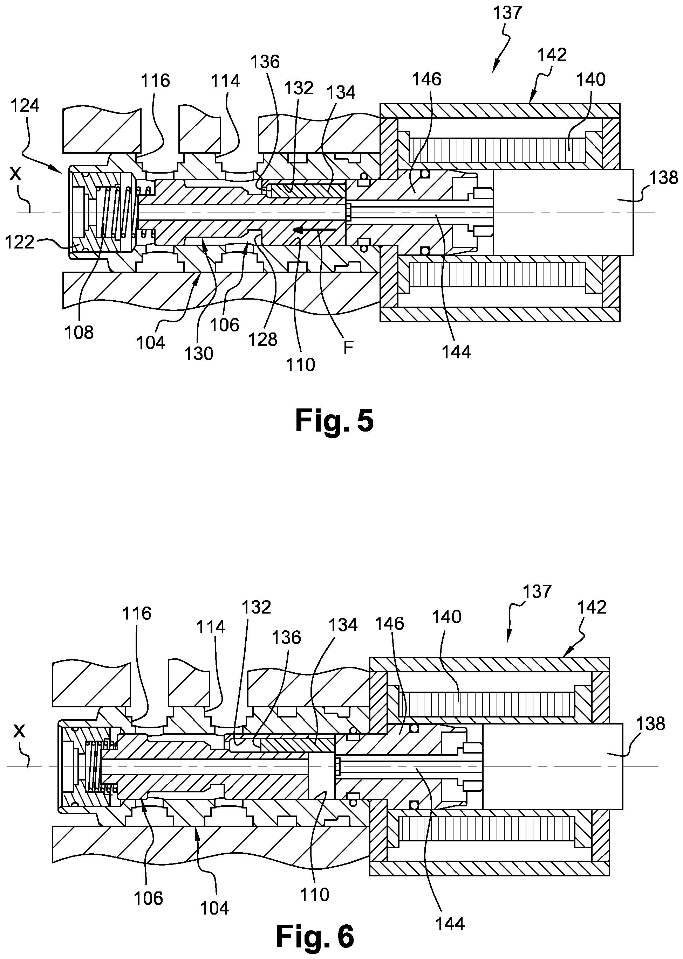

Sur les figures 5 à 7, on peut voir un exemple d'un distributeur à tiroir dont la position est commandée par des moyens d'actionnement extérieurs. Il peut s'agir d'une électrovanne.

Les électrovannes de l'état de la technique comportent un obturateur, un noyau magnétique déplacé par un champ magnétique produit par une bobine alimentée en courant électrique provoque le déplacement de l'obturateur et donc la mise en communication entre une source de fluide et un système à alimenter. L'ouverture de l'électrovanne n'est commandée que par l'alimentation de la bobine et en aucun cas directement par la pression s'appliquant sur l'obturateur.

L'électrovanne selon l'invention présente au contraire une certaine sensibilité à la pression du fluide s'appliquant sur l'obturateur.

L'électrovanne comporte un corps 104 et un piston ou tiroir 106 similaires au corps 4 et au piston 6 du clapet de la figure 1 respectivement. Un moyen de rappel 108 est prévu entre le corps et le piston pour ramener le piston en position de fermeture du piston.

Le corps 104 comporte un alésage 110 d'axe longitudinal X, dans lequel est monté à coulissement sensiblement étanche le tiroir 106. Il comporte au moins un orifice d'alimentation 114 latéral et au moins un orifice d'évacuation 116 latéral, les deux orifices latéraux 114 et 116 débouchant dans l'alésage 110 et étant disposés à des positions longitudinales différentes le long de l'axe X.

L'orifice d'alimentation latéral 114 est destiné à être connecté à une source de fluide sous pression et l'orifice d'évacuation latéral 116 est destiné à être connecté à un système à alimenter en fluide.

Dans l'exemple représenté, le corps 104 comporte deux orifices d'alimentation 114 diamétralement opposés et deux orifices d'évacuation 116 diamétralement opposés.

L'alésage 110 est fermé à une extrémité longitudinale amont par un noyau 138 qui sera décrit ci-dessous.

Le moyen de rappel 108, qui est dans l'exemple représenté formé par un ressort de compression hélicoïdal, est monté en réaction entre une extrémité longitudinale aval 120 de l'alésage opposée au fond 118 et une extrémité longitudinale aval 106.2 du tiroir opposée à la première extrémité longitudinale 106.1 du tiroir.

Dans l'exemple représenté, le ressort est en appui contre une pièce 122 fixée dans l'alésage.

Dans l'exemple représenté, le clapet comporte un évent 124 formé au niveau de la deuxième extrémité longitudinale de l'alésage 110 et le tiroir 106 comporte un passage longitudinal s'étendant sur toute sa longueur et débouchant dans ses extrémités amont et aval et communicant avec l'évent 124.

Le tiroir comporte dans sa surface latérale extérieure une gorge annulaire 126, qui dans un état de fermeture du clapet (figure 5) est située au droit de l'ouverture d'alimentation 114.

La gorge 126 est délimitée longitudinalement par une extrémité amont 128 et une extrémité aval 130.

La gorge 126 présente une certaine extension axiale de sorte que, à l'état fermé, son extrémité aval soit en amont de l'ouverture d'évacuation 116, et à l'état ouvert, son extrémité amont soit au droit de l'ouverture d'alimentation 114 et son extrémité aval soit au droit de l'ouverture d'évacuation 116 et mette en communication l'ouverture d'alimentation 114 et l'ouverture d'évacuation 116.

Le tiroir 106 comporte un logement 132 s'étendant parallèlement à l'axe longitudinal, débouchant dans l'extrémité amont de la gorge 126 et dans l'extrémité longitudinale amont du tiroir, et un élément 134 monté mobile en translation dans l'alésage de manière sensiblement étanche. L'élément 134 est en butée permanente contre un manchon magnétique 146 fixe par rapport au corps 104.

Ainsi le fluide sous pression pénétrant par l'orifice d'alimentation 114 dans la gorge 126 applique une pression sur les parois de la gorge et sur une extrémité longitudinale aval 136 de l'élément 134 qui est du côté de la gorge.

Les surfaces sur lesquelles s'applique la pression du fluide sont égales aux surfaces projetées des parois de la gorge sur un plan perpendiculaire à l'axe longitudinal.

En outre, l'électrovanne comporte des moyens d'actionnement 137 pour commander l'écoulement du fluide entre l'orifice d'alimentation 114 et l'orifice d'évacuation 116. Les moyens d'actionnement 137 comportent un noyau 138 monté mobile dans un solénoïde 140 connecté à une source de courant électrique, le solénoïde étant intégré dans une boucle magnétique 142 pour guider le champ magnétique et un poussoir 144 disposé entre le noyau magnétique et l'extrémité longitudinale amont du tiroir 106, de sorte que le déplacement du noyau 138 dans la direction de la flèche F applique un effort de poussée au tiroir 106 dans le sens d'ouverture de l'électrovanne. Le solénoïde 140 est par exemple un bobinage en cuivre.

Le manchon magnétique 146 est fixe dans le corps 104 et est assemblé entre le tiroir 106 et le noyau 138, celui-ci est monté étanche dans le corps 104 et est traversé par le poussoir 144.

Le tiroir 106, le noyau magnétique 138 et le poussoir 144 peuvent être solidaire en translation et former un équipage mobile

Les moyens d'actionnement peuvent être de tout type, par exemple mécanique, piézoélectrique...

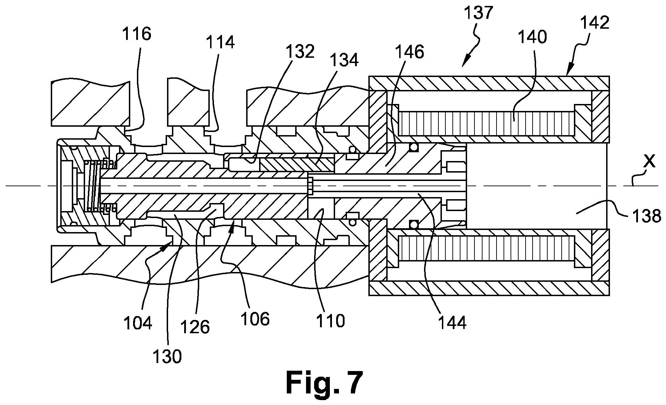

Le fonctionnement de l'électrovanne est le suivant:
Plusieurs cas de figure peuvent se présenter :
a) Les moyens d'actionnement 137 ne sont pas activés, ceci peut résulter d'une défaillance des moyens d'actionnement ou de l'alimentation électrique par exemple.
   Le fluide sous pression remplit la gorge et applique une force sur les extrémités amont et aval de la gorge. Comme pour le clapet des figures 1 et 2, la présence de l'élément en appui sur le manchon 146 qui est fixe par rapport au corps, la surface de l'extrémité aval de la gorge est plus grande que l'extrémité amont de la gorge. Cette surface active génère une force proportionnelle à la pression opposée à la charge du ressort de rappel qui provoque le déplacement du tiroir 106. Lorsque la pression est suffisante, le tiroir 106 se déplace suffisamment pour mettre en communication les orifices 114 et 116. La communication entre le système et l'évent est interrompue (figure 6).
   Ainsi l'électrovanne présente une certaine sensibilité directe au niveau de pression
b) Les moyens de commande 137 sont activés. Lorsque la pression du fluide est insuffisante pour contrer la charge du ressort, le tiroir n'est pas déplacé par le fluide. Mais du fait de l'activation des moyens d'actionnement, le noyau mobile 138 est déplacé de l'amont vers l'aval, il pousse le poussoir qui lui-même pousse le tiroir 106. Le tiroir 106 subit alors à la fois une force de poussée exercée par le poussoir et une force de poussée exercée par la pression du fluide, lorsque la force de poussée totale devient supérieure à la charge du ressort, le tiroir 106 se déplace et met en communication les orifices 114 et 116. La communication entre le système et l'évent est interrompue (figure 7).

Le déplacement du noyau magnétique 138 peut être en tout ou rien ou proportionnel au courant alimentant le solénoïde.

La pression du fluide nécessaire pour permettre la mise communication des orifices 114 et 116 sans activation de moyens d'actionnement est choisie supérieure à la pression de fluide pour laquelle les moyens d'actionnement sont programmés pour mettre en communication les orifices 114 et 116. Ainsi la sensibilité de l'électrovanne à la pression assure une fonction de sécurité en cas de défaillance de l'électrovanne.

Comme pour le clapet, plusieurs éléments 134 pourraient être montés dans le tiroir.

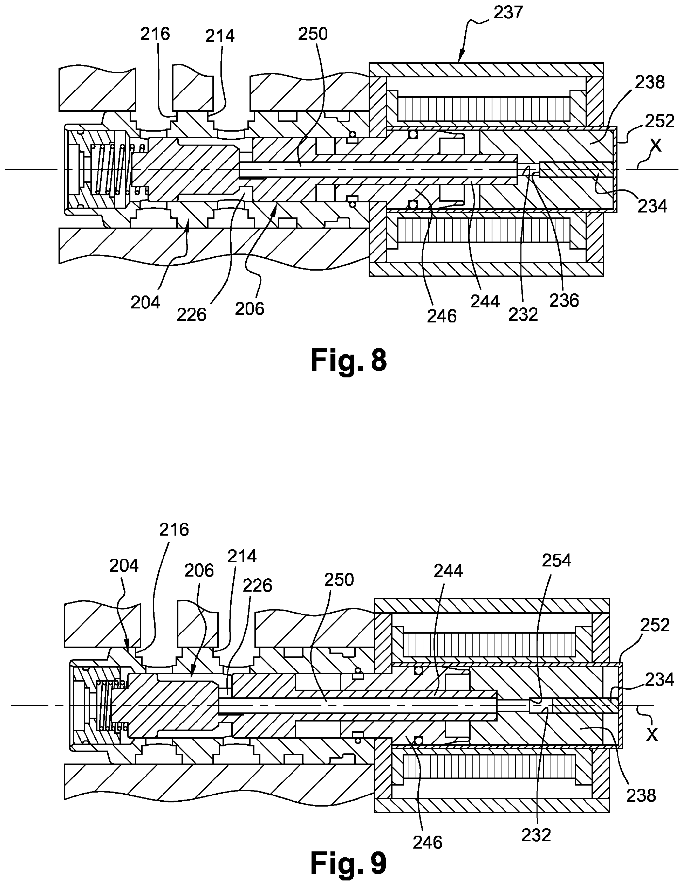

Sur les figures 8 à 10, on peut voir une variante de réalisation du distributeur des figures 5 et 6.

Dans cette variante de réalisation, le poussoir 244 et le tiroir sont d'un seul tenant et le poussoir 244 est emmanché dans le noyau mobile 238, l'ensemble forme un équipage mobile désigné par la référence 206 et monté coulissant dans le manchon magnétique 246.

Le noyau mobile 238 comporte un passage traversant 232 coaxial à l'axe longitudinal X et dans lequel est monté l'élément 234. Le montage de l'élément 234 dans le passage 232 est tel que l'élément peut coulisser par rapport au noyau et qu'une étanchéité suffisante est réalisée.

Une pièce 252 ferme le passage 232 du côté de son extrémité amont qui forme une butée axiale pour l'élément 234. Le tiroir comporte un passage 250 s'étendant entre la gorge 226 et le passage traversant 232 du noyau 238 en aval de l'élément 234 pour permettre au fluide sous pression d'entrer en contact avec la face aval 236 de l'élément 234.

Dans le cas où le fluide est de l'huile moteur, celle-ci n'étant ni corrosive, ni conductrice électrique, le noyau magnétique 238 peut baigner dans le huile moteur. En revanche, dans le cas d'un fluide corrosif et/ou conducteur électrique, des moyens pour isoler de manière étanche le noyau du fluide sont prévus.

L'extrémité amont du piston est solidaire axialement du noyau magnétique 238, il est par exemple emmanché à force dans celui-ci.

De manière avantageuse, le passage central 232 comporte un épaulement 254 situé en aval de l'élément 234 et formant une butée axiale pour l'élément 234 dans la direction aval.

Dans cet exemple le passage 250 pourrait avoir une forme quelconque puisqu'il ne sert qu'à amener le fluide sous pression en contact de l'élément 234.

Le fonctionnement de cette variante est le suivant:
Sur la figure 8, les moyens de commande 237 ne sont pas activés et la pression dans la gorge 226 est inférieure à celle permettant de vaincre la charge du ressort, le distributeur est fermé, les orifices d'alimentation 214 et d'évacuation 216 ne sont pas en communication.

Lorsque les moyens de commande 237 ne sont pas activés et que la pression du fluide est suffisante pour contrer la charge du ressort de rappel, l'élément 234 est en butée contre la pièce 252, il ne peut bouger, l'équipage mobile se déplace proportionnellement à la pression à l'encontre du ressort de rappel. L'orifice d'alimentation 214 et l'orifice d'évacuation 216 sont mis en communication. La communication entre l'orifice d'évacuation 216 et l'évent est fermé (figure 9).

Le distributeur change donc d'état sans activation des moyens de commande.

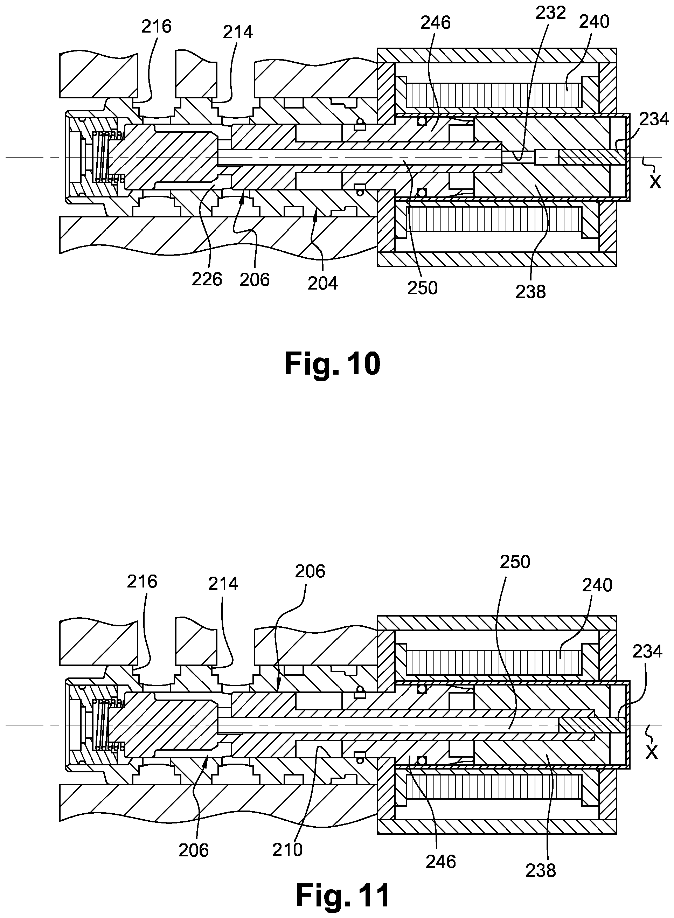

Lorsque les moyens de commande sont activés et, i.e. lorsque le solénoïde est alimenté en courant dans l'exemple représenté, et la pression du fluide est insuffisante pour contrer la force de rappel du ressort, l'équipage mobile se déplace de l'amont vers l'aval. Lorsque l'effort appliqué par l'équipage mobile et l'effort appliqué par la pression hydraulique sont supérieurs à la force de rappel du ressort, l'orifice d'alimentation 214 et l'orifice d'évacuation 216 sont mis en communication et la communication entre l'orifice d'évacuation 216 et l'évent est interrompue (figure 10).

Cette variante présente l'avantage d'être de réalisation simple.

Sur la figure 11, on peut voir encore une autre variante de réalisation du distributeur de la figure 8, dans laquelle la longueur du poussoir, qui est d'un seul tenant avec le tiroir 206, est telle que l'élément 234 coulisse directement dans le passage 250 traversant longitudinalement le tiroir. A des fins de simplicité de réalisation, le passage 250 s'étend longitudinalement le long de l'axe X, mais il pourrait être prévu que seule la portion du passage 250 logeant l'élément 234 soit rectiligne pour permettre son coulissement. Le distributeur est dans un état d'ouverture, les moyens d'actionnement étant activés ou pas.

Cette variante présente l'avantage d'être de réalisation simple.

Dans les exemples décrits, il s'agit de distributeurs trois voies mais il sera compris qu'un distributeur avec un nombre de voies plus important ne sort pas du cadre de la présente invention.

Le distributeur selon l'invention peut très avantageusement être mis en dans tout système de régulation d'une pression d'un fluide, par exemple dans une pompe à huile d'un moteur thermique pour réguler la pression d'huile dans le moteur.

Grâce à l'invention, on peut réaliser des dispositifs de commande de l'alimentation en fluide sous pression de structure simplifié car l'alésage du corps peut comporter un seul diamètre et la surface extérieure peut comporter un seul diamètre.

En outre dans le cas des distributeurs, ceux-ci offrent une sensibilité à la pression permettant d'avoir des systèmes d'alimentation à sécurité augmentée sans devoir faire appel à d'autres dispositifs comme par exemple un clapet de régulation supplémentaire.

## Revendications

1. Distributeur comportant un dispositif de commande de l'alimentation en fluide sous pression comportant un corps comprenant un alésage d'axe longitudinal (X), un équipage mobile (206) apte à coulisser dans l'alésage, au moins un orifice d'alimentation (214) réalisé dans le corps et disposé latéralement par rapport à l'axe longitudinal (X), au moins un orifice d'évacuation (216) réalisé dans le corps latéralement par rapport à l'axe longitudinal (X), l'équipage mobile (206) étant apte à coulisser entre au moins une première position d'interruption de la communication entre l'orifice d'alimentation (214) et l'orifice d'évacuation (216) et une deuxième position de mise en communication entre l'orifice d'alimentation (214) et l'orifice d'évacuation (216), des moyens de rappel de l'équipage mobile vers la première position, l'équipage mobile (206) comprenant une surface latérale destinée à coopérer avec l'alésage de manière étanche ou sensiblement étanche, au moins une gorge (226) dans la surface latérale de l'équipage mobile (206), ladite gorge (226) étant en communication permanente avec l'orifice d'alimentation (214), l'équipage mobile (206) comportant au moins un logement (232) s'étendant parallèlement à l'axe longitudinal (X) et un élément (234) monté à coulissement dans ledit logement (232), ledit logement (232) étant en communication permanente avec ladite gorge (226) de sorte qu'une extrémité dudit élément (234) soit en contact avec le fluide sous pression et dans lequel l'élément (234) est fixe par rapport au corps au moins dans un sens opposé au sens de déplacement de l'équipage mobile (226) de la première position vers la deuxième position, ledit distributeur comportant également des moyens d'actionnement externes (237) aptes à déplacer l'équipage mobile (206) dans une position d'ouverture indépendamment du niveau de pression dans la gorge (226), lesdits moyens d'actionnement (237) comportant un noyau magnétique (238) et un solénoïde (240) apte à déplacer le noyau magnétique (238) le long de l'axe longitudinal (X), dans lequel l'équipage mobile comporte un tiroir de distribution (206) comprenant la gorge (226), un poussoir (244) et le noyau magnétique (238), le poussoir (244) étant d'un seul tenant avec le tiroir de distribution (206) et étant disposé entre le tiroir de distribution (206) et le noyau magnétique (238), ledit noyau magnétique (238) étant solidaire axialement du tiroir de distribution (206), dans lequel le logement est formé dans le noyau magnétique (238) et dans lequel le tiroir de distribution (206) et le poussoir (244) comportent un passage (250) d'amenée du fluide sous pression jusqu'au logement (232) dans le noyau magnétique (238).

2. Distributeur selon la revendication 1, dans lequel l'équipage mobile (206) comporte plusieurs logements (232) en communication permanente avec ladite gorge (226) et un élément coulissant dans chaque logement (232), de sorte qu'une extrémité desdits éléments (234) soit en contact avec le fluide sous pression et dans lequel les éléments (234) sont fixes par rapport au corps au moins dans un sens opposé au sens de déplacement de l'équipage mobile (206) de la première position vers la deuxième position.

3. Distributeur la revendication 1 ou 2, dans lequel un logement de l'équipage mobile (206) est coaxial à l'axe longitudinal du corps.

4. Système hydraulique comportant un distributeur selon l'une des revendications 1 à 3.

5. Pompe hydraulique comportant un distributeur selon l'une des revendications 1 à 3.

6. Système de propulsion d'un véhicule automobile comportant un moteur thermique et une pompe selon la revendication 5.

## Patentansprüche

1. Steuerventil mit einer Vorrichtung zur Steuerung der Zufuhr einer unter Druck stehenden Flüssigkeit, umfassend einen Körper mit einer Bohrung mit einer Längsachse (X), eine bewegliche Ausstattung (206), die in der Bohrung gleiten kann, mindestens eine Zufuhröffnung (214), die im Körper ausgebildet und seitlich zur Längsachse (X) angeordnet ist, mindestens eine Auslassöffnung (216), die im Körper seitlich zur Längsachse (X) ausgebildet ist, wobei die bewegliche Ausstattung (206) zwischen mindestens einer ersten Position der Unterbrechung der Verbindung zwischen der Zufuhröffnung (214) und der Auslassöffnung (216) und einer zweiten Position der Herstellung der Verbindung zwischen der Zufuhröffnung (214) und der Auslassöffnung (216) gleiten kann, Mittel zum Zurückführen der beweglichen Ausstattung zur ersten Position, wobei die bewegliche Ausstattung (206) eine Seitenfläche, die zum dichten oder im Wesentlichen dichten Zusammenwirken mit der Bohrung bestimmt ist, und mindestens eine Nut (226) in der Seitenfläche der beweglichen Ausstattung (206) umfasst, wobei die Nut (226) in ständiger Verbindung mit der Zufuhröffnung (214) steht, wobei die bewegliche Ausstattung (206) mindestens eine Aufnahme (232) umfasst, die sich parallel zur Längsachse (X) erstreckt, und ein Element (234), das gleitend in der Aufnahme (232) montiert ist, wobei die Aufnahme (232) in ständiger Verbindung mit der Nut (226) steht, so dass ein Ende des Elements (234) in Kontakt mit der unter Druck stehenden Flüssigkeit steht und wobei das Element (234) zum Körper zumindest in einer Richtung entgegengesetzt zur Bewegungsrichtung der beweglichen Ausstattung (226) von der ersten Position in die zweite Position befestigt ist, wobei der Steuerventil auch externe Betätigungsmittel (237) umfasst, die die bewegliche Ausstattung (206) unabhängig vom Druckniveau in der Nut (226) in eine Öffnungsposition bewegen können, wobei die Betätigungsmittel (237) einen Magnetkern (238) und eine Magnetspule (240) umfassen, der den Magnetkern (238) entlang der Längsachse (X) bewegen kann, wobei die bewegliche Ausstattung einen Steuerventileinschub (206) umfasst, der die Nut (226), einen Schieber (244) und den Magnetkern (238) umfasst, der Schieber (244) und der Steuerventileinschub (206) aus einem Stück sind und dieser zwischen dem Steuerventileinschub (206) und dem Magnetkern (238) angeordnet ist, wobei der Magnetkern (238) axial fest mit dem Steuerventileinschub (206) verbunden ist, wobei die Aufnahme im Magnetkern (238) ausgebildet ist und wobei der Steuerventileinschub (206) und der Schieber (244) einen Durchgang (250) zum Zuführen der unter Druck stehenden Flüssigkeit zur Aufnahme (232) im Magnetkern (238) umfassen.

2. Steuerventil nach Anspruch 1, wobei die bewegliche Ausstattung (206) eine Vielzahl von Aufnahmen (232) in ständiger Verbindung mit der Nut (226) und ein Gleitelement in jeder Aufnahme (232) umfasst, so dass ein Ende der Elemente (234) mit der unter Druck stehenden Flüssigkeit in Kontakt steht, und wobei die Elemente (234) zum Körper zumindest in einer Richtung entgegengesetzt zur Bewegungsrichtung der beweglichen Ausstattung (206) von der ersten Position in die zweite Position befestigt sind.

3. Steuerventil nach Anspruch 1 oder 2, wobei eine Aufnahme für die bewegliche Ausstattung (206) koaxial zur Längsachse des Körpers ist.

4. Hydrauliksystem, umfassend einen Steuerventil nach einem der Ansprüche 1 bis 3.

5. Hydraulikpumpe, umfassend einen Steuerventil nach einem der Ansprüche 1 bis 3.

6. Kraftfahrzeugantriebssystem, umfassend einen Verbrennungsmotor und eine Pumpe nach Anspruch 5.

## Claims

1. A valve comprising a device for controlling a pressurised fluid supply including a body comprising a bore with a longitudinal axis (X), a moving assembly (206) able to slide in the bore, at least one supply port (214) made in the body and disposed laterally to the longitudinal axis (X), at least one discharge port (216) made in the body laterally to the longitudinal axis (X), the moving assembly (206) being able to slide between at least a first position for stopping communication between the supply port (214) and the discharge port (216) and a second position for communicating the supply port (214) with the discharge port (216), means for returning the moving assembly to the first position, the moving assembly (206) comprising a lateral surface for sealingly or substantially sealingly cooperating with the bore, at least one groove (226) in the lateral surface of the moving assembly (206), said groove (226) being in permanent communication with the supply port (214), the moving assembly (206) comprising at least one housing (232) extending parallel to the longitudinal axis (X) and an element (234) slidably mounted in said housing (232), said housing (232) being in permanent communication with said groove (226) such that one end of said element (234) is in contact with the pressurised fluid and wherein the element (234) is fixed with respect to the body at least in a direction opposite to the direction of travel of the moving assembly (226) from the first position to the second position, said valve also comprising external actuation means (237) able to move the moving assembly (206) in an opening position independently of the pressure level in the groove (226), said actuation means (237) comprising a magnetic core (238) and a solenoid (240) able to move the magnetic core (238) along the longitudinal axis (X), wherein the moving assembly includes a valve spool (206) comprising the groove (226), a pusher (244) and the magnetic core (238), the pusher (244) being as a single piece with the valve spool (206) and being disposed between the valve spool (206) and the magnetic core (238), said magnetic core (238) being axially integral with the valve spool (206), wherein the housing is formed in the magnetic core (238) and wherein the valve spool (206) and the pusher (244) include a passageway (250) for feeding the pressurised fluid to the housing (232) in the magnetic core (238).

2. The valve according to claim 1, wherein the moving assembly (206) includes several housings (232) in permanent communication with said groove (226) and a sliding element in each housing (232), such that one end of said elements (234) is in contact with the pressurised fluid and in which the elements (234) are fixed with respect to the body at least in a direction opposite to the direction of travel of the moving assembly (206) from the first position to the second position.

3. The valve according to claim 1 or 2, wherein a housing of the moving assembly (206) is coaxial to the longitudinal axis of the body.

4. A hydraulic system comprising a valve according to one of claims 1 to 3.

5. A hydraulic pump including a valve according to one of claims 1 to 3.

6. A system for propelling an automobile vehicle including a thermal engine and a pump according to claim 5.
